(19) Europäisches Patentamt

European Patent Office

Office européen des brevets

(11) **EP 1 650 746 A1**

(12) **DEMANDE DE BREVET EUROPEEN**

(43) Date de publication:
26.04.2006 Bulletin 2006/17

(51) Int Cl.:
*G10L 15/22* (2006.01)

(21) Numéro de dépôt: **05292020.4**

(22) Date de dépôt: **28.09.2005**

(84) Etats contractants désignés:
**AT BE BG CH CY CZ DE DK EE ES FI FR GB GR
HU IE IS IT LI LT LU LV MC NL PL PT RO SE SI
SK TR**
Etats d'extension désignés:
**AL BA HR MK YU**

(30) Priorité: **19.10.2004  FR 0411092**

(71) Demandeur: **France Telecom S.A.
75015 Paris (FR)**

(72) Inventeurs:
• **Bretier, Philippe
22660 Trelevern (FR)**
• **Panaget, Franck
22560 Trebeurden (FR)**
• **Sadek, David
22700 Perous-Guirec (FR)**

(74) Mandataire: **Bentz, Jean-Paul
Novagraaf Technologies,
122, rue Edouard Vaillant
92593 Levallois-Perret Cedex (FR)**

(54) **Procédé et programme d'ordinateur pour la gestion d'une activité de production sonore d'un système d'interaction personne-machine**

(57)    L'invention concerne notamment un procédé de gestion d'une activité de production sonore d'un système d'interaction personne-machine à composante vocale, ce procédé comprenant des opérations consistant à exercer l'activité de production sonore du système, à capter une activité acoustique externe émanant d'un agent externe au système, et à analyser le contenu sémantique de tout énoncé éventuellement inclus dans l'activité acoustique externe.

Le procédé de l'invention comprend en outre une opération de détection consistant à détecter une activité acoustique externe pendant une période d'activité de production sonore du système, et un processus de décision consistant notamment à interrompre l'activité de production sonore du système dans le cas où le temps écoulé depuis le début de l'activité acoustique externe dépasse une première durée limite prédéterminée (P1) et /ou dans le cas où la durée de l'activité acoustique externe dépasse une deuxième durée limite prédéterminée (P2).

Fig. 7

EP 1 650 746 A1

**EP 1 650 746 A1**

**Description**

L'invention concerne, de façon générale, l'automatisation de processus de communication.

Plus précisément, l'invention concerne, selon un premier de ses aspects, un procédé de gestion d'une activité de production sonore d'un système d'interaction personne-machine à composante vocale, ce procédé comprenant des opérations consistant à exercer l'activité de production sonore du système au moins en produisant des énoncés, à capter une activité acoustique externe émanant d'un agent externe au système, et à analyser les contenus syntaxique et sémantique de tout énoncé éventuellement inclus dans l'activité acoustique externe.

Par "système d'interaction personne-machine à composante vocale" on entend ici tout système présentant une fonctionnalité de reconnaissance vocale, et / ou de synthèse vocale, et / ou d'enregistrement de message vocal, et / ou d'émission d'annonces vocales, etc.

Les services vocaux, en particulier téléphoniques, et plus généralement tous les systèmes interactifs de production sonore, offrent souvent une fonctionnalité d'intervention en force, connue de l'homme du métier sous la désignation anglaise de "barge-in". Le "barge-in" consiste à permettre à l'utilisateur d'un système interactif d'interrompre, par une intervention orale, la production sonore du système (voix humaine ou de synthèse, temps réel ou enregistré, musique, bruits, son, etc.).

L'un des intérêts de cette fonctionnalité est d'accroître l'efficacité d'utilisation du système en réduisant la durée de l'interaction et ainsi d'augmenter la satisfaction des utilisateurs. En particulier, les utilisateurs qui interagissent régulièrement avec un même système peuvent ainsi interrompre certaines réactions du système, qu'ils connaissent déjà, dès qu'ils ont reconnu le début de ladite production sonore. Par exemple, un système récapitulant ce qu'il a compris de l'utilisateur au début de sa réaction, permet à ce dernier de détecter rapidement un cas d'erreur de compréhension du système, lui permettant ainsi de le corriger sans attendre la fin de l'énoncé du système).

Dans le cas d'une interaction "face à face" entre un utilisateur et un système d'interaction personne-machine à composante vocale, l'activité acoustique de l'utilisateur et de son environnement est capturée à partir du microphone d'un ordinateur fixe ou portable, d'un PDA ou d'un terminal UMTS. L'acquisition du signal acoustique est souvent fondée sur l'utilisation d'un bouton-poussoir, autrement dit sur un paradigme connu de l'homme du métier sous la désignation anglaise de "push-to-talk" ou "talkie-walkie", et selon lequel l'utilisateur doit appuyer sur un bouton physique ou virtuel (et éventuellement le maintenir appuyé) pendant qu'il parle.

Classiquement, dans un système d'interaction personne-machine à composante vocale mis en oeuvre à travers un réseau de télécommunications ou dans un système d'interaction "face à face" non fondé sur le paradigme "push-to-talk", la condition de déclenchement de l'interruption est la détection d'une activité acoustique sur le canal vocal d'entrée du système. Cet événement est généralement produit par un module de détection bruit/parole lorsqu'il détecte une forte variation énergétique du signal acoustique perçu sur une fenêtre temporelle réduite.

Cette activité acoustique peut correspondre à un énoncé vocal de l'utilisateur. Dans ce cas, l'interruption est justifiée.

Mais cette activité acoustique peut éventuellement aussi correspondre à un bruit venant de l'environnement dans lequel l'utilisateur est situé (par exemple, un bruit de voiture ou de porte, un tiers qui parle, etc.) ou à un écho de l'énoncé du système (par exemple, en cas d'imperfection des réducteurs d'échos présents dans les réseaux de télécommunications ou sur les équipements terminaux). Dans ce cas, le mécanisme d'interruption est déclenché alors qu'il ne devrait pas l'être.

Pour diminuer ces erreurs d'interruption, certains systèmes d'interaction personne-machine à composante vocale utilisent la capacité de rejet d'un composant de reconnaissance de parole. Couplé au module de détection d'activité acoustique, ce module a pour fonction la reconnaissance des mots prononcés par l'utilisateur à partir du signal acoustique correspondant à l'activité détectée. Pour cela, le module de reconnaissance de parole utilise un modèle acoustico-linguistique décrivant le langage "reconnaissable" par le système. Ce modèle peut contenir un modèle du rejet (ou modèle "poubelle") permettant d'identifier le signal acoustique comme un bruit de l'environnement ne correspondant pas à une production de parole de l'utilisateur. Ainsi, en cours de production sonore par le système d'interaction, après détection d'une activité acoustique, le système d'interaction attend que le module de reconnaissance identifie des mots du langage (c'est-à-dire ne rejette pas l'activité acoustique) avant de s'interrompre. Si après détection d'une activité acoustique, le module de reconnaissance la rejette, le système d'interaction ne s'interrompt pas. Mais bien sûr, cela suppose que le résultat de reconnaissance soit calculable en temps réel, c'est-à-dire en un temps non perceptible pour l'utilisateur.

Les systèmes fondés sur le paradigme "push-to-talk" ne sont pas soumis aux problèmes de prise de décision erronée d'interruption du fait qu'ils reçoivent un signal acoustique en entrée uniquement lorsque l'utilisateur appuie sur le bouton. En revanche, le fait de requérir l'action physique de pression sur le bouton restreint le champ d'applications de systèmes d'interaction à composante vocale, entre autres dans le cas d'applications pour ou durant lesquelles l'utilisateur a ses mains prises par une autre activité.

Dans ce contexte, l'invention a pour but de proposer un procédé de gestion de l'activité de production sonore d'un système d'interaction personne-machine à composante vocale capable, sans utilisation du paradigme "push-to-talk", d'interrompre l'activité de production sonore du système à bon escient.

A cette fin, le procédé de l'invention, par ailleurs conforme à la définition générique qu'en donne le préambule ci-dessus, est essentiellement caractérisé en ce qu'il comprend en outre une opération de détection consistant à détecter une activité acoustique externe au moins pendant une période d'activité de production sonore du système, et un processus de décision consistant au moins à interrompre l'activité de production sonore du système dans le cas où le temps écoulé depuis le début de l'activité acoustique externe dépasse une première durée limite prédéterminée et / ou dans le cas où la durée de l'activité acoustique externe dépasse une deuxième durée limite prédéterminée.

De préférence, le procédé de l'invention comprend en outre une opération de mesure de recouvrement consistant à mesurer la durée de recouvrement de l'activité acoustique externe et de l'activité de production sonore du système, le processus de décision consistant en outre au moins à inhiber l'interruption de l'activité de production sonore du système dans le cas où la durée de recouvrement est au plus égale à une troisième durée limite, et / ou dans le cas où la durée de l'activité acoustique externe attribuable à un temps de parole est au plus égale à une quatrième durée limite, et / ou dans le cas où l'activité acoustique externe n'est pas reconnue comme porteuse d'un énoncé adapté à l'interaction en cours.

La première durée limite est avantageusement supérieure à la deuxième durée limite, et la quatrième durée limite est avantageusement inférieure à la première et à la deuxième durées limites.

L'invention concerne aussi un programme d'ordinateur propre à gérer une activité de production sonore d'un système d'interaction personne-machine à composante vocale, ce programme comprenant un module de production sonore ou acoustique chargé de l'activité de production sonore du système, un module de détection de parole propre à surveiller l'apparition d'une activité acoustique externe émanant d'un agent externe au système, un module de reconnaissance de parole propre à reconnaître les mots (c'est-à-dire l'énoncé ou contenu syntaxique) éventuellement inclus dans l'activité acoustique externe, et éventuellement un module d'interprétation propre à construire lé contenu sémantique de l'énoncé formé par ces mots, ce programme étant caractérisé en ce qu'il comprend en outre un module de décision d'interruption propre à détecter l'apparition d'une activité acoustique externe pendant une période d'activité de production sonore du système, et propre à interrompre l'activité de production sonore du système au moins dans le cas où le temps écoulé depuis le début de l'activité acoustique externe dépasse une première durée limite prédéterminée et dans le cas où la durée de l'activité acoustique externe dépasse une deuxième durée limite prédéterminée.

De préférence, le module de décision d'interruption est propre à mesurer la durée de recouvrement de l'activité acoustique externe et de l'activité de production sonore du système, et à inhiber l'interruption de l'activité de production sonore du système dans le cas où la durée de recouvrement est au plus égale à une troisième durée limite, et / ou dans le cas où la durée de l'activité acoustique externe attribuable à un temps de parole est au plus égale à une quatrième durée limite, et / ou dans le cas où l'activité acoustique externe n'est pas reconnue comme porteuse d'un énoncé adapté à l'interaction en cours.

D'autres caractéristiques et avantages de l'invention ressortiront clairement de la description qui en est faite ci-après, à titre indicatif et nullement limitatif, en référence aux dessins annexés, dans lesquels :

- la figure 1 est un schéma représentant une liaison téléphonique entre un utilisateur et un système d'interaction personne-machine à composante vocale;

- la figure 2 est un schéma représentant une liaison face-à-face entre un utilisateur et un système d'interaction personne-machine à composante vocale;

- la figure 3 représente les composants d'un système d'interaction personne-machine à composante vocale en liaison téléphonique avec un utilisateur;

- la figure 4 est un schéma d'interfaçage du module de décision d'interruption propre à l'invention avec les modules connus d'un système d'interaction personne-machine à composante vocale;

- la figure 5 est un diagramme d'état d'une interaction vocale personne-machine dans la mise en oeuvre de l'invention;

- la figure 6 est un schéma représentant chronologiquement l'organisation des principaux évènements découlant, selon l'invention, d'une activité acoustique d'un utilisateur; et

- la figure 7 est un diagramme récapitulant les règles et prises de décisions mises en oeuvre dans la forme la plus complète du procédé de l'invention.

L'invention, qui s'applique à tout système d'interaction personne-machine à composante vocale, a pour but d'en optimiser l'ergonomie en permettant à l'utilisateur d'un tel système d'en interrompre, par une intervention orale, la production sonore.

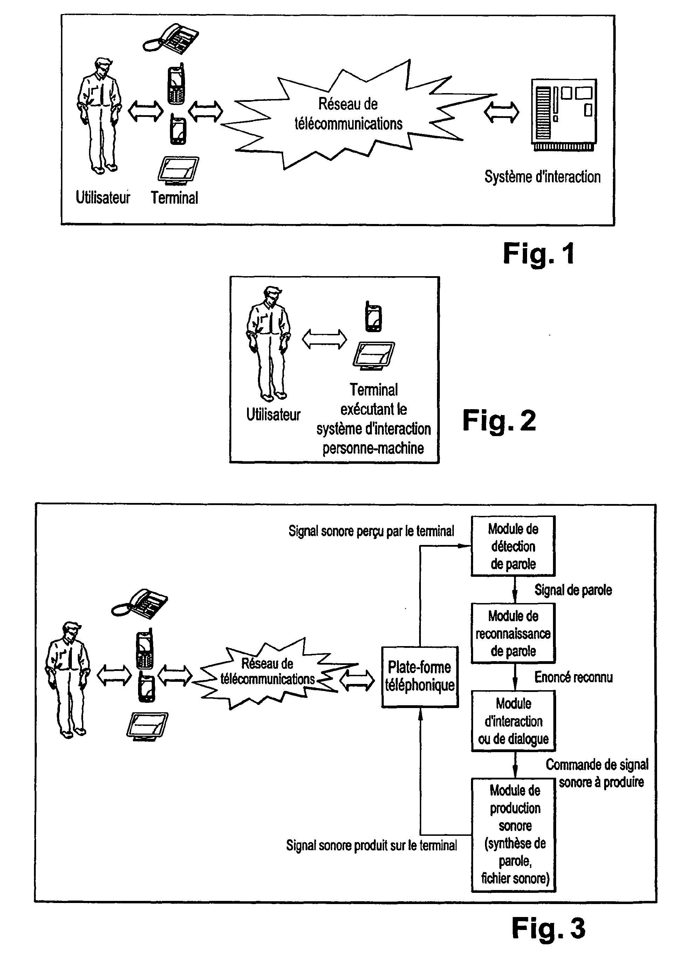

Les figures 1 et 2 illustrent la mise en oeuvre d'un tel système d'interaction, respectivement dans le cas d'une liaison téléphonique et d'une liaison directe.

La figure 3, qui représente de façon plus détaillée la structure fonctionnelle d'un système d'interaction connu mis en oeuvre pour une liaison téléphonique, fait apparaître, outre une plate-forme téléphonique, une série de modules interconnectés, comprenant un module de détection de parole, un module de reconnaissance de parole, un module d'interaction ou de dialogue, et un module de production sonore, utilisant par exemple une synthèse de parole ou des fichiers sonores.

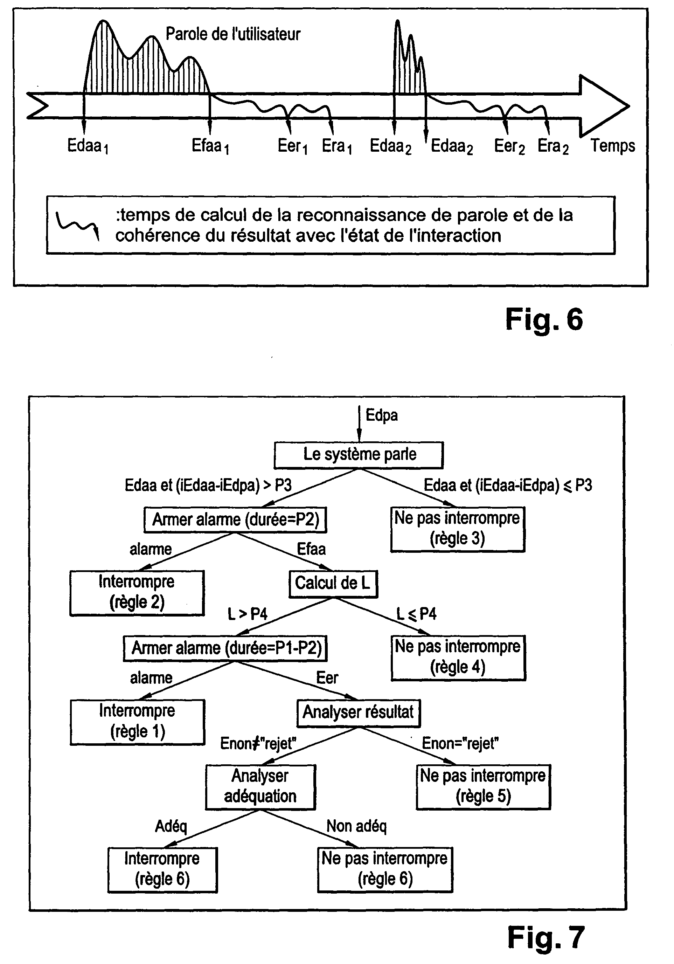

La solution proposée par l'invention consiste globalement à introduire, dans un tel système, un module de décision d'interruption propre à interrompre l'activité de production sonore du système selon certaines règles hiérarchisées, telles qu' illustrées à la figure 7.

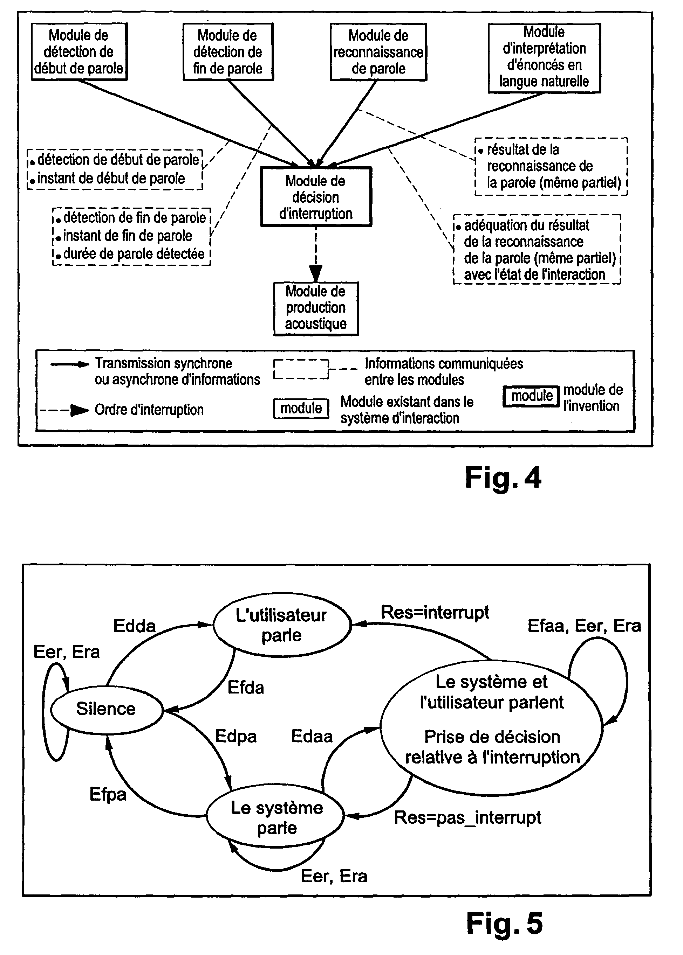

La figure 4 représente et identifie les interactions qu'entretient ce module de décision d'interruption avec les modules existants, le module de détection de parole étant supposé se décomposer en un module de détection de début de parole et en un module de détection de fin de parole.

Les contraintes imposées à ce module de décision d'interruption sont :

. de contenir l'intégralité du processus de décision d'interruption;

. de réduire les décisions erronées d'interruption, autrement dit de réduire les interruptions dues à la détection d'une activité acoustique différente d'un énoncé (reconnaissable, significatif et à destination du système d'interaction) de l'utilisateur, et

. de supprimer la nécessité de mettre en oeuvre le paradigme "push-to-talk" dans les applications d'interaction personne-machine face à face.

Dans la suite de la présente description, les instants temporels seront supposés exprimés en millisecondes.

Par convention, "i" désignera l'instant présent (le "maintenant"), et t(E) désignera l'instant d'émission d'un événement E donné.

La prise de décision repose sur l'exploitation de tout ou partie des événements suivants :

- la détection du début d'une activité acoustique produite par le système d'interaction sur son canal acoustique de sortie, notée Edpa (pour **E**vénement **d**ébut **p**roduction **a**coustique);

- la détection de la fin d'une activité acoustique produite par le système d'interaction sur son canal acoustique de sortie, notée Efpa (pour **E**vénement **f**in **p**roduction **a**coustique);

- la détection du début de la parole ou d'un événement acoustique significatif sur la canal acoustique d'entrée (détecté par le détecteur bruit/parole), notée Edaa (pour **E**vénement **d**ébut **a**cquisition **a**coustique);

- la détection de la fin de la parole ou d'un événement acoustique significatif sur la canal acoustique d'entrée (détecté par le détecteur bruit/parole), notée Efaa (pour **E**vénement **f**in **a**cquisition **a**coustique);

- la disponibilité de l'énoncé reconnu par un module de reconnaissance de la parole, notée Eer (pour **E**vénement **é**noncé **r**econnu);

- la disponibilité du résultat de l'adéquation du résultat (même partiel) de la reconnaissance de la parole avec l'état de l'interaction personne-machine, notée Era (pour **E**vénement **r**ésultat de l'**a**déquation).

Bien que la prise en compte de ce dernier type d'information, à savoir l'adéquation du résultat de la reconnaissance de la parole avec l'état de l'interaction personne-machine, soit spécifique à l'invention, cette information peut être obtenue, de façon connue de l'homme du métier, à l'aide d'un module d'interprétation d'énoncés en langue naturelle en contexte d'interaction personne-machine, tel que celui décrit dans le document de brevet FR 2 787 902 du même déposant.

Les différents états que peut adopter une interaction vocale personne-machine dans le cadre de l'invention sont représentés sur la figure 5. La chronologie des événements correspondants est détaillée à la figure 6.

Le module de prise de décision exploite aussi les informations suivantes :

- la durée, notée L, de détection de la parole ou de l'activité acoustique significative. La durée L est calculée soit directement par le module de détection bruit/parole soit à l'aide de la formule suivante **L = t(Efaa) - t(Edaa);**

- l'énoncé (c'est-à-dire la séquence de mots) reconnu par le module de reconnaissance de la parole, noté Enon;

- et le résultat, noté Adéq, d'une combinaison booléenne indiquant si l'énoncé reconnu est adéquat (Adéq est alors vrai) ou non (Adéq est alors faux) par rapport l'état de l'interaction.

Le résultat du module de prise de décision (noté Res) est constitué soit :

- par une interruption de l'activité acoustique en cours de production par le système d'interaction (dans ce cas, **Res = interrupt**),

- soit par une absence d'interruption de l'activité acoustique en cours de production par le système d'interaction (dans ce cas, **Res = pas_interrupt**). Dans ce dernier cas, l'énoncé reconnu (et éventuellement interprété) ne sera pas pris en compte par le système d'interaction.

La prise de décision intervient bien sûr uniquement lorsque le système est en train de réaliser une activité acoustique telle que, par exemple, l'émission d'un énoncé ou la diffusion de musique, autrement dit alors que le module de prise de décision a reçu l'événement Edpa mais pas encore l'événement Efpa.

La prise de décision ne peut pas dépasser un délai (de l'ordre de trois secondes) au delà duquel le "barge-in" devient caduque (car au-delà de ce délai, la probabilité que ce soit l'utilisateur qui s'interrompe est forte).

Le module de prise de décision doit donc respecter la contrainte suivante :

$$\mathtt{t(Eer)\ -\ t(Edaa)\ \leq\ P1,}$$

le paramètre P1 exprimant le délai maximum pour prendre une décision d'interruption.

Autrement dit, le module de prise de décision doit respecter le corollaire suivant:

$$\mathtt{R\grave{e}gle\ 1\ :\ Si\ i\ -\ t(Edaa)\ \geq\ P1\ alors\ Res\ =\ interrupt,}$$

le paramètre P1 étant typiquement choisi tel que : **P1 ≤ 3000**.

Les résultats de la reconnaissance de la parole et l'analyse de l'énoncé reconnu interviennent souvent un certain délai après la détection de la fin de l'activité acoustique. Il est donc nécessaire de fixer, par la règle 2 ci-après, une contrainte sur la durée maximum du signal acoustique au-delà de laquelle le système doit être interrompu :

$$\mathtt{R\grave{e}gle\ 2\ :\ Si\ i\ -\ t(Edaa)\ \geq\ P2\ et\ si\ Efaa\ non\ encore\ re\c{c}u,}$$

$$\mathtt{alors\ Res\ =\ interrupt,}$$

le paramètre P2 étant typiquement choisi tel que : **P2 < P1.**

Pour réduire les interruptions erronées notamment dues à l'écho du système d'interaction, le module de prise de décision doit par ailleurs mettre en oeuvre la règle suivante :

$$\mathtt{R\grave{e}gle\ 3\ :\ Si\ (t(Edaa)\ -\ t(Edpa))\ \leq\ P3,}$$

$$\mathtt{alors\ Res\ =\ pas\_interrupt,}$$

le paramètre P3 étant typiquement choisi tel que : **P3 ≤ 3000**, ce paramètre P3 représentant le délai durant lequel le système d'interaction est sourd lorsqu'il débute une production sonore.

L'activité acoustique perçue doit avoir une durée suffisante pour correspondre à un énoncé. Cette contrainte est exprimée par la règle suivante:

```
Règle 4 : Si L ≤ P4 alors Res = pas_interrupt,
```

le paramètre P4 étant typiquement choisi tel que : **P4 ≤ 200**.

Les modules de reconnaissance de la parole utilisent un modèle acoustico-linguistique du langage à reconnaître. Certains de ces modèles contiennent un modèle du rejet (ou modèle "poubelle"). Si le résultat de la reconnaissance correspond à ce rejet, le système ne doit pas être interrompu, cette situation étant prise en compte par la règle suivante :

```
Règle 5: Si Enon = élément du modèle "rejet",

alors Res = pas_interrupt.
```

La règle suivante indique que si l'énoncé reconnu n'est pas en adéquation avec l'état de l'interaction, le système n'est pas interrompu:

```
Règle 6: Res = pas_interrupt si_et_seulement_si non Adéq.
```

Le module de prise de décision peut mettre en oeuvre tout ou partie de ces six règles.

L'invention tire ses avantages de l'utilisation d'une durée limite telle que définie par la règle 1, ainsi, accessoirement, que de l'utilisation des durées limites telles que définies par les règles 2 à 4, de l'utilisation du résultat d'adéquation de la règle 6, et de la combinaison de ce résultat avec les autres règles.

L'ensemble des combinaisons possibles est récapitulé dans le tableau ci-dessous, dont chaque ligne correspond à une variante, et dans lequel les "X" indiquent les règles mises en oeuvre.

| Règle 1 | Règle 2 | Règle 3 | Règle 4 | Règle 5 | Règle 6 |
|---------|---------|---------|---------|---------|---------|
|         |         | X       |         |         |         |
|         |         |         | X       |         |         |
|         |         | X       | X       |         |         |
| X       |         |         |         | X       |         |
| X       | X       |         |         | X       |         |
| X       |         |         |         | X       | X       |
| X       | X       |         |         | X       | X       |
| X       |         | X       |         | X       |         |
| X       | X       | X       |         | X       |         |
| X       |         | X       |         | X       | X       |
| X       | X       | X       |         | X       | X       |
| X       |         |         | X       | X       |         |
| X       | X       |         | X       | X       |         |
| X       |         |         | X       | X       | X       |

Suite de tableau

| | Règle 1 | Règle 2 | Règle 3 | Règle 4 | Règle 5 | Règle 6 |
|---|---|---|---|---|---|---|
| | X | X | | X | X | X |
| | X | | X | X | X | |
| | X | X | X | X | X | |
| | X | | X | X | X | X |
| | X | X | X | X | X | X |

**Revendications**

1. Procédé de gestion d'une activité de production sonore d'un système d'interaction personne-machine à composante vocale, ce procédé comprenant des opérations consistant à exercer l'activité de production sonore du système au moins en produisant des énoncés, à capter une activité acoustique externe émanant d'un agent externe au système, et à analyser les contenus syntaxique et sémantique de tout énoncé éventuellement inclus dans l'activité acoustique externe, **caractérisé en ce qu'**il comprend en outre une opération de détection consistant à détecter une activité acoustique externe au moins pendant une période d'activité de production sonore du système, et un processus de décision consistant au moins à interrompre l'activité de production sonore du système dans le cas où le temps écoulé depuis le début de l'activité acoustique externe dépasse une première durée limite prédéterminée (P1) et / ou dans le cas où la durée de l'activité acoustique externe dépasse une deuxième durée limite prédéterminée (P2).

2. Procédé suivant la revendication 1, **caractérisé en ce qu'**il comprend en outre une opération de mesure de recouvrement consistant à mesurer la durée de recouvrement de l'activité acoustique externe et de l'activité de production sonore du système, et **en ce que** le processus de décision consiste en outre au moins à inhiber l'interruption de l'activité de production sonore du système dans le cas où la durée de recouvrement est au plus égale à une troisième durée limite (P3), et / ou dans le cas où la durée de l'activité acoustique externe attribuable à un temps de parole est au plus égale à une quatrième durée limite (P4), et / ou dans le cas où l'activité acoustique externe n'est pas reconnue comme porteuse d'un énoncé adapté à l'interaction en cours (Règle 5 ou Règle 6).

3. Procédé suivant la revendication 1 ou 2, **caractérisé en ce que** la première durée limite est supérieure à la deuxième durée limite.

4. Procédé suivant l'une quelconque des revendications précédentes combinée à la revendication 2, **caractérisé en ce que** la quatrième durée limite est inférieure à la première et à la deuxième durées limites.

5. Programme d'ordinateur propre, lorsque ledit programme fonctionne sur un ordinateur, à gérer une activité de production sonore d'un système d'interaction personne-machine à composante vocale, ce programme comprenant un module de production sonore ou acoustique chargé de l'activité de production sonore du système, un module de détection de parole propre à surveiller l'apparition d'une activité acoustique externe émanant d'un agent externe au système, un module de reconnaissance de parole propre à reconnaître les mots éventuellement inclus dans l'activité acoustique externe, et éventuellement un module d'interprétation propre à construire le contenu sémantique de l'énoncé formé par ces mots, **caractérisé en ce qu'**il comprend en outre un module de décision d'interruption propre à détecter l'apparition d'une activité acoustique externe pendant une période d'activité de production sonore du système, et propre à interrompre l'activité de production sonore du système au moins dans le cas où le temps écoulé depuis le début de l'activité acoustique externe dépasse une première durée limite prédéterminée et / ou dans le cas où la durée de l'activité acoustique externe dépasse une deuxième durée limite prédéterminée.

6. Programme d'ordinateur suivant la revendication 5, **caractérisé en ce que**, lorsque ledit programme fonctionne sur un ordinateur, le module de décision d'interruption est propre à mesurer la durée de recouvrement de l'activité acoustique externe et de l'activité de production sonore du système, et à inhiber l'interruption de l'activité de production sonore du système dans le cas où la durée de recouvrement est au plus égale à une troisième durée limite, et / ou dans le cas où la durée de l'activité acoustique externe attribuable à un temps de parole est au plus égale à une quatrième durée limite, et / ou dans le cas où l'activité acoustique externe n'est pas reconnue comme porteuse d'un énoncé adapté à l'interaction en cours.

**7.** Programme d'ordinateur suivant la revendication 5 ou 6, **caractérisé en ce que**, lorsque ledit programme fonctionne sur un ordinateur, la première durée limite (P1) est supérieure à la deuxième durée limite (P2).

**8.** Programme d'ordinateur suivant l'une quelconque des revendications 5 à 7 combinée à la revendication 6, **caractérisé en ce que**, lorsque ledit programme fonctionne sur un ordinateur, la quatrième durée limite (P4) est inférieure à la première (P1) et à la deuxième (P2) durées limites.

**Fig. 1**

**Fig. 2**

**Fig. 3**

Fig. 4

Fig. 5

Parole de l'utilisateur

Edaa₁  Efaa₁  Eer₁  Era₁  Edaa₂  Edaa₂  Eer₂  Era₂  Temps

⌇ :temps de calcul de la reconnaissance de parole et de la cohérence du résultat avec l'état de l'interaction

**Fig. 6**

Edpa

Le système parle

Edaa et (iEdaa-iEdpa) > P3        Edaa et (iEdaa-iEdpa) ⩽ P3

Armer alarme (durée=P2)        Ne pas interrompre (règle 3)

alarme        Efaa

Interrompre (règle 2)        Calcul de L

L > P4        L ⩽ P4

Armer alarme (durée=P1-P2)        Ne pas interrompre (règle 4)

alarme        Eer

Interrompre (règle 1)        Analyser résultat

Enon≠"rejet"        Enon="rejet"

Analyser adéquation        Ne pas interrompre (règle 5)

Adéq        Non adéq

Interrompre (règle 6)        Ne pas interrompre (règle 6)

**Fig. 7**

**Office européen
des brevets**

**RAPPORT DE RECHERCHE EUROPEENNE**

Numéro de la demande

EP 05 29 2020

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/098253 A1 (BALENTINE ET AL) 20 mai 2004 (2004-05-20) * abrégé; figure 5 * * alinéas [0064] - [0071] * ----- | 1-8 | G10L15/22 |
| X | US 2003/158732 A1 (PI ET AL) 21 août 2003 (2003-08-21) * abrégé; figures 1,4 * * alinéas [0026], [0027] * ----- | 1-8 | |
| X | ROSE R C ET AL: "A hybrid barge-in procedure for more reliable turn-taking in human-machine dialog systems" IEEE WORKSHOP ON AUTOMATIC SPEECH RECOGNITION AND UNDERSTANDING, 2003. ASRU '03. 2003, 30 novembre 2003 (2003-11-30), - 3 décembre 2003 (2003-12-03) pages 198-203, XP010713188 ST THOMAS, VI, USA ISBN: 0-7803-7980-2 * abrégé * * section 2. Existing Barge-in detection methods * * section 4. Hybrid feature/model based detection * ----- | 1,5 | **DOMAINES TECHNIQUES RECHERCHES (IPC)** <br><br> G10L |
| X | US 2004/078201 A1 (PORTER ET AL) 22 avril 2004 (2004-04-22) * abrégé * ----- | 1,5 | |

Le présent rapport a été établi pour toutes les revendications

| Lieu de la recherche | Date d'achèvement de la recherche | Examinateur |
|---|---|---|
| La Haye | 19 janvier 2006 | Quélavoine, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 2020

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-01-2006

| Document brevet cité au rapport de recherche | Date de publication | Membre(s) de la famille de brevet(s) | Date de publication |
|---|---|---|---|
| US 2004098253 A1 | 20-05-2004 | AUCUN | |
| US 2003158732 A1 | 21-08-2003 | AUCUN | |
| US 2004078201 A1 | 22-04-2004 | WO 03001781 A1 | 03-01-2003 |

EPO FORM P0460

Pour tout renseignement concernant cette annexe : voir Journal Officiel de l'Office européen des brevets, No.12/82